Europäisches Patentamt

(19) **European Patent Office**

Office européen des brevets

(11) Publication number: **0 053 039**

**A1**

(12) **EUROPEAN PATENT APPLICATION**

(21) Application number: **81305556.3**

(22) Date of filing: **24.11.81**

(51) Int. Cl.³: **C 08 J 9/20**
**C 08 F 12/08**

(30) Priority: **26.11.80 US 210566**

(43) Date of publication of application:
**02.06.82 Bulletin 82/22**

(84) Designated Contracting States:
**BE CH DE FR GB IT LI NL SE**

(71) Applicant: **CELLOFOAM A.G.**
**Pilatusstrasse 14 P.O. Box 762**
**CH-6002 Lucerne(CH)**

(72) Inventor: **Smith, Stuart B.**
**2069 Christian Circle**
**Conyers Georgia 30207(US)**

(74) Representative: **Spencer, Graham Easdale et al,**
**A.A. Thornton & CO Northumberland House 303-306,**
**High Holborn**
**London WC1V 7LE(GB)**

(54) **Method of making expandable polymeric particles.**

(57) A method of making expandable polymeric particles in which polymeric particles are formed by suspension polymerization, polymerization is interrupted before it is complete, the partially polymerized particles are size graded, the polymerization of the desirably sized particles is completed in suspension and the particles are impregnated with blowing agent.

EP 0 053 039 A1

Croydon Printing Company Ltd

- 1 -

## Method of making expandable polymeric particles

This invention is concerned with a method of making expandable polymeric particles which comprises polymerizing a polymerizable material in suspension to form a particulate polymer and impregnating the polymeric particles with a blowing agent.

The formation of expandable polymeric particles, such as expandable polystyrene beads for use in expandable molding processes, has historically presented two major difficulties: how to best incorporate the blowing agent into the particle in order to render it expandable and how to achieve expandable particles of a relatively uniform size.

Discussions of problems attending the impregnation of polymeric particles with blowing agent may be found in United States Patents Nos. 3,192,169 to Doak; 3,265,643 to Hatano et al.; 3,359,220 to Wright; 3,657,162 to Finestone et al.; 3,696,060 to Burt; and 4,153,763 to Bracke; and in British Patents Nos. 807,237 to Styrene Products Ltd.; 998,289 to Dow Chemical Co.; 994,074 to Koppers Co., Inc.; and 1,364,758 to Monsanto Ltd. Where, for example, the polymeric particles or beads are formed by suspension polymerization, if the blowing agent is added to the initial polymerization mixture the following problems may be encountered: reduction in the rate of polymerization; formation of deformed rather than spherical particles; formation of lower molecular weight polymer than would be obtained in the absence of blowing agent; and coagulation of the beads in the suspension. If, on the other hand, the practitioner awaits the formation of finished beads and then incorporates blowing agent via a post-polymerization steeping process, difficulties of a different sort are presented: relatively long steeping periods are required because of the low absorption rate of blowing agent into the finished polymer; the incorporated blowing agent is not uniformly distributed in the beads, usually resulting in particles having hard cores; an excess of blowing agent must be introduced to the impregnation vessel, necessitating the subsequent separation of the excess blowing agent from the impregnated beads; and additional additives are usually required. The preceding art-recognized drawbacks have led to suggestions of impregnation methods involving the addition of some or all of the blowing agent at a point intermediate the initiation of the suspension polymerization and the formation of fully polymerized beads. See, for example, United States Patents Nos. 3,192,169; 3,265,643; 3,359,220; and 3,657,162.

The difficulties of achieving expandable particles of a relatively uniform size are described in United States Patents Nos. 4,085,169 to Saito et al.; 4,153,763 to Bracke; and 4,174,425 to Saito et al; and in British Patents Nos. 994,074 to Koppers Co., Inc.; 1,255,237 to Sekisui Kagaku Kogyo Kabushiki Kaisha; and 1,364,758 to Monsanto Ltd. Uniformly-sized expandable beads are desired because accurate metering of particles for molding or other processing is facilitated, and thus more uniform quality of finished goods is attainable; and because non-uniformity in size leads to non-uniformity in expansion in the production of finished molded goods. Moreover, beads respectively sized below and above certain minima and maxima may not be useful as expandable particles: for instance, particles that are too small will not retain blowing agent and therefore have no storage or shelf life as expandable particles, generally have a very low degree of polymerization, and present recovery and waste water contamination problems; and particles that are too large result in unduly long impregnation times for the incorporation of blowing agent and a non-uniform distribution of blowing agent within the beads, leading to the production of inferior molded articles.

The inherent difficulty of producing uniformly-sized particles by suspension polymerization, which has been attributed to the necessary presence of a dispersing agent and the need for agitation of the polymerization mixture, has led to a variety of proposed methods for achieving a relatively uniform expandable bead size, most of which include sieving the particles to segregate beads of suitable size.

One method has been to form polystyrene beads by suspension polymerization, screen the finished beads to arrive at a desirable bead size population, and then render the selected beads expandable by impregnation with blowing agent. Although this method avoids the incorporation of blowing agent into beads of a size unsuitable for useful expandable particles and permits rejected beads to be used in non-expanded articles, the screening and re-suspension of the beads for impregnation with blowing agent according to this method necessarily includes the previously described drawbacks associated with impregnating already-formed beads with blowing agent.

If, on the other hand, the re-suspension procedure is avoided by incorporating blowing agent into all of the particles yielded by suspension polymerization, blowing agent is wastefully added to particles that are so small as to be practically useless as expandable particles, due to the lack of storage life, and too large to be uniformly impregnated with blowing agent. And as to both the aforementioned types of particles and those particles useful as expandable beads per se but of a size not suitable for the intended application of the sought-for product expandable beads, the utility of the undesired beads is limited by the presence of the blowing agent. Moreover, if the blowing agent is added with the initial polymerization mixture, the unsatisfactory ramifications discussed above are realized.

One proposed method for obtaining uniformly-sized expandable particles essentially utilizes uniformly-sized seed particles of polymer to form uniformly-sized larger particles by accretion and polymerization of monomer. Since no source of seed or nucleating particles is described, other than via screening the product of a conventional suspension polymerization, and since no mention is made of the presence of blowing agent in the seed particles, this method apparently has utility only as an alternative use for undersized particles formed in a conventional process utilizing a post-bead formation blowing agent impregnation system.

We have now developed a method for making expandable polymeric particles which fall within a desired size range whereby only particles of a desired size are fully formed and the impregnation of undesirably-sized beads with blowing agent is avoided.

According to the present invention, there is provided a method of making expandable polymeric particles which comprises polymerizing a polymerizable material in suspension to form a particulate polymer and impregnating the polymeric particles with a blowing agent, characterised in that

(a) the suspension polymerization is interrupted at the completion of a first stage when the polymerizable material is only partially polymerized but forms particles having sufficient physical integrity to withstand size classification,

(b) the partially polymerized particles are classified to obtain particles falling within a desired size range,

(c) the desirably-sized particles are subjected to a second stage of suspension polymerization in order to complete the polymerization of the polymerizable material, and

(d) the desirably-sized particles are impregnated with a blowing agent.

Because the polymerization is discontinued prior to completion, the segregated particles contain substantial amounts of unpolymerized monomer. The blowing agent (and other additives) are readily absorbed by this monomer and are uniformly distributed throughout the particles. The optimum degree of polymerization in the first stage may readily be determined by those skilled in the art. If the polymerization is allowed to proceed too close to completion, the time to absorb the blowing agent becomes unduly long and uniform distribution difficult to obtain. On the other hand, if the polymerization in the first stage is inadequate, the particles cannot be classified.

In general, the polymerization should be at least 58% complete, preferably from 60 to 80%. These ranges are useful particularly in the case of the preparation of polystyrene beads. The partially polymerized particles are then classified by size in order to segregate those particles falling within the size range desired for the final product expandable beads, with the so-segregated particles preferably being simultaneously impregnated with blowing agent and fully polymerized in the subsequent polymerization. Optionally and preferably, the partially polymerized beads of undesired size are recycled to the feed monomer(s) for dissolution.

The polymerizable material employed in the practice of the invention is preferably styrene, but it can also be a mixture of styrene with one or more copolymerizable monomers, preferably a vinylidene monomer such as a different monovinylidene aromatic monomer, such as alphamethylstyrene, vinyl toluene, p-ethylstyrene, 2,4-dimethylstyrene, o-chlorostyrene, 2,5-dichlorostyrene, and the like. When a comonomer is employed with styrene in the practice of the invention, its concentration should be such that the styrene constitutes at least 50 percent, preferably at least 75 percent, of the weight of the polymerizable material.

The polymerizable material can also contain a rubber, such as natural rubber, EPDM, polybutadiene, polyisoprene, copolymers of butadiene and/or isoprene with lesser amounts of comonomers such as styrene, acrylonitrile, methyl methacrylate, and the like, dissolved in the styrene and any other monomers included in the polymerizable material. When employed, the rubber ordinarily constitutes from about 1 to about 10 percent by weight of the polymerizable material.

The blowing agent employed in the practice of the invention is preferably a volatile organic compound which has an atmospheric boiling point of less than about 80°C., preferably in the range of about -10°C to about 80°C. It should be non-reactive and have at most a slight solvent action on the end-product polymer. Exemplary of suitable blowing agents for thermoplastic styrene polymers are the aliphatic hydrocarbons such as butane, isobutane and the pentanes. The preferred blowing agent for use in the present invention is pentane.

When desired, the blowing agent can comprise a mixture of a major amount, for example 70-99 percent by weight, of a blowing agent of the type described above and a minor amount, such as 30-1 percent by weight, of an organic solvent having a solvent action on the product polymer(s). Exemplary of suitable solvents for thermoplastic styrene polymers are acetone, methylene chloride, styrene monomer, benzene, xylene, carbon tetrachloride, chloroform, and the like.

The total amount of blowing agent employed in the process of the invention is from about 3 to about 10 percent, preferably from about 5 to about 8 percent, based on the weight of the polymerizable material.

In one preferred manner of utilizing the invention in the production of uniformly-sized, expandable polystyrene beads, an 8000 liter suspension polymerization vessel is charged with 3400 liters water, 165 grams Naccanol 90F, 10 grams potassium persulfate, 15 kilograms tricalcium phosphate, 3750 liters styrene monomer, 16.8 kilograms benzyl peroxide (75% solution) and 3.5 kilograms T-butyl perbenzoate. The reactor temperature is raised to about 90°C. over a period of about one hour and the suspension polymerization conducted at that temperature for about another five hours. At about that time an exotherm is noted by the reaction vessel temperature climbing to about 92°C. At that point, about 70 percent of the styrene has been converted to polystyrene and the beads are hard and discrete and still contain styrene monomer. 1.7 kilograms tricalcium phosphate are added, the reaction vessel is cooled to about 82°C., and the partially polymerized polystyrene beads are dumped, washed, rinsed, dewatered and dried. The dried polystyrene particles are screened and the particles of desired size are segregated. Beads of a size larger or smaller than the desired expandable bead size are preferably recycled to the styrene monomer holding tank for dissolution and reuse in the suspension polymerization vessel.

Once sufficient beads in the desired size range have been accumulated, the polymerization vessel is charged with 3400 liters demineralized water, 3400 kilograms beads, 1650 grams tricalcium phosphate and 10 grams potassium persulfate. 34 kilograms BCL 46L tetrabromovinyl cyclohexane and 8.5 kilograms dicumyl peroxide dissolved in 50 kilograms styrene monomer are added to the reactor, the temperature of which is then raised to 100°C. During temperature build-up in the reactor, the reactor is pressurized with nitrogen to 10 psi for one-half hour. Then 405 liters pentane are slowly added over a one and one-half hour period. The reactor is then held at 110°C. for 6 hours and then cooled to 35°C., at which point antifoam is added and the reactor dumped. The beads are washed with water containing nitric acid, rinsed, dewatered in a centrifuge, dried in a fluidized bed at 90°F., and lubricated with 0.0075% zinc stearate and 0.01% HISIL to yield uniformly sized, expandable polymeric beads of polystyrene suitable for use in expansion molding processes.

Claims:

1.          A method of making expandable polymeric particles which comprises polymerizing a polymerizable material in suspension to form a particulate polymer and impregnating the polymeric particles with a blowing agent, characterised in that

(a) the suspension polymerization is interrupted at the completion of a first stage when the polymerizable material is only partially polymerized but forms particles having sufficient physical integrity to withstand size classification,

(b) the partially polymerized particles are classified to obtain particles falling within a desired size range,

(c) the desirably-sized particles are subjected to a second stage of suspension polymerization in order to complete the polymerization of the polymerizable material, and

(d) the desirably-sized particles are impregnated with a blowing agent.

2.          A method according to claim 1, characterised in that the polymerization in the first stage is not more than 80% complete.

3.          A method according to claim 1, characterised in that the polymerization in the first stage is from 60 to 80% complete.

4.          A method according to any of claims 1 to 3, characterised in that the undesirably-sized particles resulting from step (b) are recycled to the polymerizable material used as feedstock for step (a).

5.      A method according to any of claims 1 to 4, characterised in that the step (c) and (d) are carried out substantially simultaneously.

6.      A method according to any of claims 1 to 5, characterised in that the polymerizable material is styrene.

7.      A method according to any of claims 1 to 6, characterised in that the blowing agent is pentane.

8.      A method according to any of claims 1 to 7, characterised in that the second stage polymerization is carried out at a higher temperature than the first stage polymerization.

European Patent Office

**EUROPEAN SEARCH REPORT**

Application number

EP 81 30 5556

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| Y/D | US - A - 3 192 169 (K.W. DOAK)<br><br>* claim 1; column 2, lines 38-46; column 2, line 60 - column 3, line 23; example 1 *<br><br>-- | 1-3,5-8 | C 08 J 9/20<br>C 08 F 12/08 |
| Y | GB - A - 1 094 315 (FOSTER GRANT)<br><br>* claims *<br><br>-- | 1-3,5-8 | |
| Y/D | GB - A - 1 364 758 (MONSANTO)<br><br>* claim 1 *<br><br>-- | 1,6,7 | TECHNICAL FIELDS SEARCHED (Int.Cl. 3)<br><br>C 08 J 9/16<br>        9/18<br>        9/20<br>C 08 F 12/08 |
| Y/D | GB - A - 1 255 237 (SEKISUI KA-GAKU KOGYO K.K.)<br><br>* claims 1,5; page 2, lines 4-98; page 3, lines 101-112 *<br><br>-- | 1,4-7 | |
| A | EP - A - 0 000 572 (BASF)<br><br>* claims 1,2; page 4,lines 21-28; page 5, lines 33-36; page 6, lines 21-29; examples 1,3 *<br><br>------ | 1,4-7 | |

CATEGORY OF CITED DOCUMENTS

X: particularly relevant if taken alone
Y: particularly relevant if combined with another document of the same category
A technological background
O non-written disclosure
P intermediate document
T theory or principle underlying the invention
E earlier patent document, but published on, or after the filing date
D document cited in the application
L document cited for other reasons

& member of the same patent family, corresponding document

| The present search report has been drawn up for all claims | | |
|---|---|---|
| Place of search | Date of completion of the search | Examiner |
| The Hague | 09-03-1982 | HALLEMEESCH |

EPO Form 1503.1  06.78